Europäisches Patentamt

European Patent Office

Office européen des brevets

(19)

(11) Publication number: **0 266 888**
**A1**

(12) **EUROPEAN PATENT APPLICATION**

(21) Application number: 87308625.0

(22) Date of filing: 29.09.87

(51) Int. Cl.⁴: **F16B 23/00**

(30) Priority: 29.09.86 JP 230287/86

(43) Date of publication of application:
**11.05.88 Bulletin 88/19**

(84) Designated Contracting States:
**DE FR GB IT SE**

(71) Applicant: **Adachi, Yukio**
**2019-1, Oaza Toshima Aza Jusanwari**
**Shippo-cho**
**Ama-gun Aichi-ken(JP)**

(72) Inventor: **Adachi, Yukio**
**2019-1, Oaza Toshima Aza Jusanwari**
**Shippo-cho**
**Ama-gun Aichi-ken(JP)**

(74) Representative: **Senior, Alan Murray et al**
**J.A. KEMP & CO 14 South Square Gray's Inn**
**London WC1R 5EU(GB)**

(54) **Bolts and drivers.**

(57) A bolt (B) has a plurality of projections (3) and recesses (4) formed in alternating relation on at least four equal sections in the top face of the bolt head (1) which are divided by a plurality of diametrical lines extending through the center of the bolt head (1). A driver adapted to be used for the bolt is disclosed which has a plurality of projections and recesses formed in alternating relation on at least four equal sections in the end face of the driver head which are divided by a plurality of diametrical lines extending through the center of the driver head.

FIG. 1

EP 0 266 888 A1

## BOLTS AND DRIVERS

This invention relates to improved bolts and improved drivers used for fastening or loosening the bolts.

Various bolts or screws have been known such as hexagon or square head bolts, hexagon or square socket head bolts, and slotted or Phillips head screws (all of these fasteners will be called "bolt" which term also includes internally threaded means closed by a head at one end). Also, various tools for these bolts have been known such as spanners, wrenches, and slotted or Phillips screwdrivers (all of these tools will be called the "driver").

Although these prior bolts and drivers perform their intended function satisfactorily, they suffer from certain disadvantages. For instance, when the bolt and the driver are different in size, they may not be used. Even if they may be used, the driver tends to improperly engage the bolt, thereby crushing the bolt head or possibly causing damage to the driver itself. Further, in applying a slotted or Phillips screwdriver to a slotted or Phillips head bolt, the operator must use two hands; one must hold the bolt and the other turn the driver, resulting in a poor efficiency of operation.

According to the present invention there is provided a bolt characterised by a plurality of projections and recesses formed in alternating relation on at least four equal sections in the top face of the bolt head, the sections being separated by a plurality of diametrical lines extending through the center of the bolt head.

The invention also provides a driver for a bolt, the driver having a head, a plurality of projections and recesses formed in alternating relation on at least four equal sections in the end face of the driver head, the sections being separated by a plurality of diametrical lines extending through the center of the driver head.

The bolt and driver of the invention can be reliably engaged with each other and efficient to use. In many forms, a driver of the invention can be applied to a bolt of the invention which is of a different head size.

The present invention will be described by way of example with reference to the accompanying drawings in which:-

FIG. 1 is a perspective view of a bolt of the present invention;

FIG. 2 is an end view in the direction of the arrow X in FIG. 1;

FIG. 3 is a perspective view of a driver of the present invention; and

FIG. 4 is an end view in the direction of the arrow Y in FIG. 3.

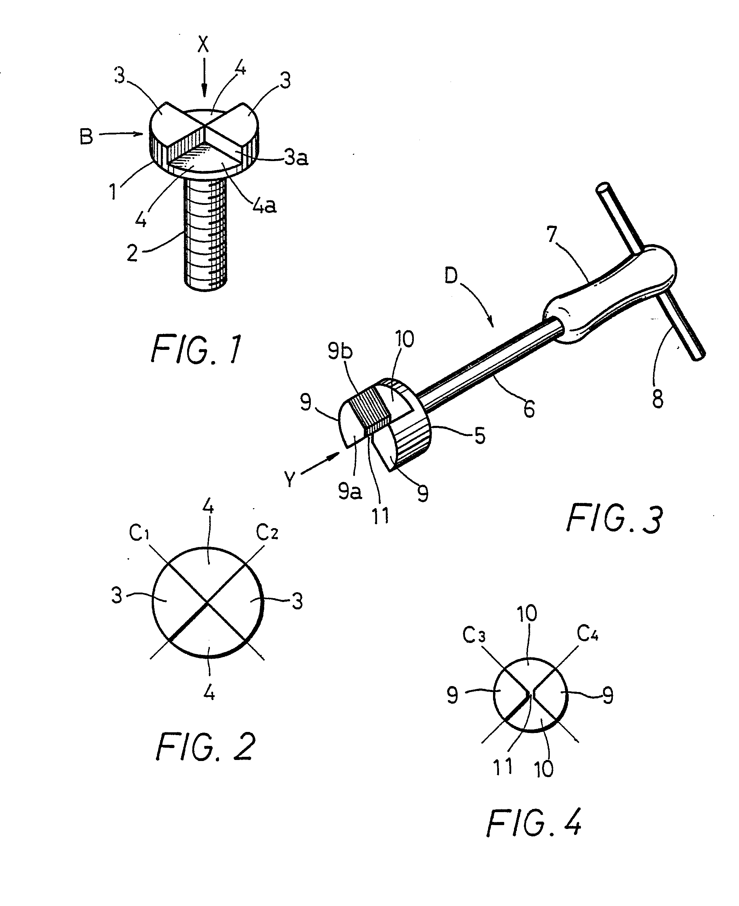

Referring to FIGS. 1 and 2, shown therein is a bolt B constructed in accordance with the present invention. As shown therein, the bolt B of the invention includes a head 1 and a threaded body 2. The head 1 is divided into four equal sections by two diametrical lines $C_1$ and $C_2$. Alternate sections of the head 1 are formed with projections 3 coextending thereto, and the intervening portions are thus formed with recesses 4 coextending thereto.

Specifically, the head 1 includes each two alternately arranged projections 3 and recesses 4 of substantially sectorial configuration having an angular extent of 90 degrees. The side faces 3a of the projections 3 and the bottom faces 4a of the recesses 4 serve as engaging faces for a driver which will be described later. Each bottom face 4a extends at right angles to each side face 3a. The depth of each recess 4 is set to be substantially two-thirds the thickness of the bolt head 1.

Referring now to FIGS. 3 and 4, shown therein is a driver D used for fastening or loosening the bolt B described above. As may be seen, the driver D includes a generally cylindrical head 5 having a diameter smaller than that of the bolt B, a shank 6 extending from the head 5, and a grip 7 secured to the shank 6. The grip 7 has a handle 8 slidably mounted thereto and extending perpendicular to the axial direction of the shank 6. As with the head 1 of the bolt B, the head 5 of the driver D is divided into four equal sections by two diametrical lines $C_3$ and $C_4$. Alternate sections of the head 5 are formed with projections 9 coextending thereto, and the intervening portions are thus formed with recesses 10 coextending thereto.

Specifically, the head 5 includes each two alternately arranged projections 9 and recesses 10 of substantially sectorial configuration having an angular extent of 90 degrees. The top faces 9a and the side faces 9b of the projections 9 serve as engaging faces which are engageable with the engaging faces of the bolt B. The depth of each recess 10 is set to be greater than that of the recess 4 of the bolt head 1, and each top face 9a extends at right angles to each side face 9b. A clearance 11 is provided coextending along the side faces 9b between the diametrically opposed projections 9.

When the bolt B and the driver D thus constructed are used, the projections 9 of the driver D are inserted into and engaged by the recesses 4 of the bolt B. The driver D is then turned to fasten or loosen the bolt B. The rotational force of the driver D is transmitted to the bolt B through abutting engagement of the side faces 9b of the projections 9 of the driver D with the side faces 3a of the projections 3 of the bolt B.

It is to be noted that when the driver D does not engage the bolt B, the operator turns the driver D within a range of at least 90 degrees until proper engagement is made between the driver D and the bolt B. Also, it can be seen that the present invention utilizes the positive engagement between the projections 3, 9 and the recesses 4, 10 which may be determined by their relative angular positions. Thus, between the driver D and the bolt B having like sections, the driver D may be used for various sizes of bolts B regardless of the size of the driver D.

An important feature of the present invention resides in the unique design of the bolt head and the driver head which permits the positive engagement of the driver with the bolt to improve the efficiency of operation. Another feature of the invention is that the driver may be applied to a bolt head different in size from the head of the driver.

Although the preferred embodiment utilizes four sections in the bolt head and the driver head, it is obvious that other even numbers of sections could be utilized. For example, these sections could be six or eight in number. As will be understood, the sections of the head on which the projections and recesses are alternately provided are normally segments of a circle, extending to the centre of the circle, though it might be possible to have a central non-operative circular area recessed or not with the sections disposed therearound.

**Claims**

1. A bolt characterised by a plurality of projections and recesses formed in alternating relation on at least four equal sections in the top face of the bolt head, the sections being separated by a plurality of diametrical lines extending through the center of the bolt head.

2. A bolt according to claim 1 wherein the sections are segments of a circle which extend to the centre of the circle.

3. A bolt according to claim 1 or 2 wherein there are four sections.

4. A driver for a bolt, the driver having a head, a plurality of projections and recesses formed in alternating relation on at least four equal sections in the end face of the driver head, the sections being separated by a plurality of diametrical lines extending through the center of the driver head.

5. A driver according to claim 4 wherein the sections are segments of a circle which extend to the centre of the circle.

6. A driver according to claim 4 or 5 wherein there are four sections.

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X,A | DE-A-1 500 829 (MARTINS) <br> * figure 1 * <br> --- | 1-6 | F 16 B 23/00 |
| X | DE-U-1 778 101 (BLAUPUNKT-WERKE) <br> * figures 1-3 * <br> --- | 1-3 | |
| X | FR-A-2 216 474 (NORDISKE KABEL) <br> * figure 1 * <br> --- | 1-3 | |
| X | US-A-1 894 034 (FIEG) <br> * figure 1 * <br> --- | 1-3 | |
| A | FR-A-2 562 180 (INEDJIAN) <br> * figure 7 * <br> ----- | 4-6 | |

TECHNICAL FIELDS SEARCHED (Int. Cl.3)

F 16 B 23/00

The present search report has been drawn up for all claims

| Place of search | Date of completion of the search | Examiner |
|---|---|---|
| BERLIN | 19-11-1987 | ZAPP E |

EPO FORM 1503 03.82 (P0401)